# EUROPÄISCHE PATENTSCHRIFT

(11) **EP 3 717 293 B1**
(45) Veröffentlichungstag und Bekanntmachung des Hinweises auf die Patenterteilung: **30.03.2022**
(21) Anmeldenummer: 18808283.8
(22) Anmeldetag: 21.11.2018
(51) Int. Cl.: B60K 15/035, B60K 15/03

(54) **FÜLLSTANDSVENTIL FÜR EINE DRUCKAUSGLEICHSLEITUNG EINER FLUIDTANKANORDNUNG SOWIE ENTSPRECHENDE FLUIDTANKANORDNUNG**
FILLING LEVEL VALVE FOR A PRESSURE EQUALIZATION LINE OF A FLUID TANK ARRANGEMENT, AND CORRESPONDING FLUID TANK ARRANGEMENT
SOUPAPE DE NIVEAU DE REMPLISSAGE POUR UNE CONDUITE D'ÉQUILIBRAGE DE PRESSION D'UN ENSEMBLE DE RÉSERVOIR DE FLUIDE AINSI QU'ENSEMBLE DE RÉSERVOIR DE FLUIDE CORRESPONDANT

(30) Priorität: 30.11.2017 DE 102017221596
(43) Veröffentlichungstag der Anmeldung: 07.10.2020
(73) Patentinhaber: aft automotive GmbH, 48268 Greven-Reckenfeld (DE)
(72) Erfinder: MAY, Thomas, 48565 Steinfurt (DE)
(74) Vertreter: Dietz, Christopher Friedrich
(86) Internationale Anmeldenummer: PCT/EP2018/082070
(87) Internationale Veröffentlichungsnummer: WO 2019/105823

(56) Entgegenhaltungen:
- DE-A1-102013 013 213
- DE-A1-102013 018 194
- GB-A- 2 544 004
- US-A1- 2011 005 614
- US-A1- 2015 210 528
- US-A1- 2016 129 779

## Beschreibung

Die Erfindung betrifft ein Füllstandsventil für eine Druckausgleichsleitung einer Fluidtankanordnung, wobei die Druckausgleichsleitung zwischen einem Fluidtank und einer in den Fluidtank einmündenden Einfüllleitung strömungstechnisch angeschlossen ist, und wobei das Füllstandsventil einen an dem Fluidtank anordenbaren Anschlussstutzen aufweist, von dem ein in dem Fluidtank anordenbares Tauchrohr ausgeht, das strömungstechnisch an den Anschlussstutzen angeschlossen ist, wobei in dem Tauchrohr ein durch einen verengten Durchströmungsquerschnitt gebildeter Strömungswiderstand vorliegt. Die Erfindung betrifft weiterhin eine Fluidtankanordnung.

Aus dem Stand der Technik ist beispielsweise die Druckschrift GB 2 544 004 A bekannt. Diese beschreibt eine Ventilgehäuse-Montagestruktur, die eine Verbesserung der Montagefähigkeit eines Ventilgehäuses in Bezug auf eine Montagebasis erreicht und die ein Lösen des Ventilgehäuses von der Montagebasis verhindert.

Es ist Aufgabe der Erfindung, ein Füllstandsventil vorzuschlagen, welches gegenüber bekannten Füllstandsventilen Vorteile aufweist, insbesondere eine besonders einfache Einstellbarkeit auf unterschiedliche Fluide ermöglicht.

Dies wird erfindungsgemäß mit einem Füllstandsventil mit den Merkmalen des Anspruchs 1 erreicht. Dabei ist vorgesehen, dass das Füllstandsventil derart ausgestaltet ist, dass ab einem Erreichen des Tauchrohrs durch ein Fluid aufgrund eines nur in dem Tauchrohr möglichen Druckausgleichs bei einem weiteren Einfüllen von Fluid in den Fluidtank ein Fluidpegel in dem Tauchrohr schneller ansteigt als abseits des Tauchrohrs und das Fluid den Strömungswiederstand erreicht, bevor der Schwimmer mit dem Ventilsitz zum Unterbrechen der Strömungsverbindung durch das Füllstandsventil zusammenwirkt, sodass sich der Druckverlust über das Füllstandsventil bei Erreichen des Strömungswiderstands durch das Fluid zum Unterbinden oder Einschränken des Entlüftens des Fluidtanks durch das Füllstandsventil erhöht.

Das Füllstandsventil kommt im Rahmen der Fluidtankanordnung zum Einsatz. Die Fluidtankanordnung verfügt über den Fluidtank sowie die Einfüllleitung, über welche Fluid in den Fluidtank einfüllbar ist. Die Einfüllleitung weist insoweit beispielsweise auf ihrer dem Fluidtank abgewandten Seite einen Einfüllstutzen auf, welcher zur Aufnahme einer Einfüllvorrichtung, beispielsweise einer Zapfeinrichtung für Kraftstoff, vorgesehen und ausgebildet ist. Während des Einfüllens von Fluid in den Fluidtank durch die Einfüllleitung steigt der Fluidpegel in dem Fluidtank und verdrängt die in dem Fluidtank vorliegende Luft. Entweicht diese durch die Einfüllleitung in Richtung des Einfüllstutzens, so kann es zu einem Mitnehmen von Fluid kommen, sodass das Fluid aus dem Einfüllstutzen herausspritzt.

Aus diesem Grund ist die Druckausgleichsleitung vorgesehen, welche strömungstechnisch zwischen dem Fluidtank und der Einfüllleitung angeschlossen ist. Die Druckausgleichsleitung dient dem Herstellen eines Druckausgleichs zwischen dem Fluidtank und der Einfüllleitung. Insbesondere tritt die durch das Einfüllen des Fluids verdrängte Luft durch die Druckausgleichsleitung aus dem Fluidtank aus und gelangt durch diese in die Einfüllleitung. Die Druckausgleichsleitung mündet dabei bevorzugt derart aus dem Fluidtank aus und/oder in die Einfüllleitung ein, dass die aus dem Fluidtank in die Druckausgleichsleitung beziehungsweise aus der Druckausgleichsleitung in die Einfüllleitung überströmende Luft kein Mitnehmen des Kraftstoffs in die von dem Fluidtank abgewandte Richtung bewirkt.

Üblicherweise mündet die Einfüllleitung bezüglich einer Einbaulage der Fluidtankanordnung unterhalb der Druckausgleichsleitung in den Fluidtank ein. Beispielsweise mündet die Druckausgleichsleitung durch ein Tankdach des Fluidtanks in diesen ein, sodass also die Druckausgleichsleitung an einer in Einbaulage der Fluidtankanordnung geodätisch zuoberst liegenden Stelle in den Fluidtank einmündet beziehungsweise dort an diesen strömungstechnisch angeschlossen ist. Aus diesem Grund kann die durch das Einfüllen des Fluids verdrängte Luft auch noch bei bereits weitgehend gefülltem Fluidtank durch die Druckausgleichsleitung herausgeführt werden.

Das Füllstandsventil ist strömungstechnisch zwischen der Druckausgleichsleitung und dem Fluidtank angeordnet. In anderen Worten ist also die Druckausgleichsleitung über das Füllstandsventil strömungstechnisch an den Fluidtank angeschlossen. Das Füllstandsventil ist derart ausgestaltet, dass es bei Überschreiten eines bestimmten Füllstands in dem Fluidtank die Druckausgleichsleitung zumindest teilweise verschließt beziehungsweise blockiert, sodass über die Druckausgleichsleitung kein oder lediglich ein eingeschränkter Druckausgleich zwischen dem Fluidtank und der Einfüllleitung erfolgt. Das Füllstandsventil kann insoweit auch als füllstandsgesteuertes Abschaltventil bezeichnet werden. Hierfür ist auch der englische Begriff "fill limit valve" gebräuchlich. Das Fluid liegt in jedem Fall als Flüssigkeit vor. Beispielsweise wird ein Kraftstoff, beispielsweise Benzin oder Diesel, oder ein sonstiger Betriebsstoff, beispielsweise ein Reduktionsmittel oder eine Reduktionsmittellösung, als Fluid verwendet.

Übliche Zapfeinrichtungen sind derart ausgestaltet, dass bei einem Unterbrechen des Druckausgleichs zwischen dem Fluidtank und der Einfüllleitung über die Druckausgleichsleitung die Zufuhr von Fluid in den Fluidtank unterbrochen wird. Hierfür ist es gemäß einer der Erfindung zugrunde liegenden überraschenden Erkenntnis zunächst ausreichend, dass der Druckausgleich hinreichend stark behindert wird, ein vollständiges Unterbrechen des Druckausgleichs ist nicht notwendig. Erfindungsgemäß ist es daher vorgesehen, dass in dem Tauchrohr der durch den verengten Durchströmungsquerschnitt gebildete Strömungswiderstand angeordnet ist.

Das Tauchrohr geht von dem Anschlussstutzen aus und ist zumindest bereichsweise, insbesondere vollständig, in dem Fluidtank anordenbar. Beispielsweise wird das Tauchrohr durch eine Tanköffnung in den Fluidtank eingebracht, nämlich vorzugsweise derart, dass der Anschlussstutzen außerhalb des Fluidtanks vorliegt und sich das von dem Anschlussstutzen ausgehende Tauchrohr in den Fluidtank hinein erstreckt. Der Anschlussstutzen ist bevorzugt zum Anschließen der Druckausgleichsleitung an das Füllstandsventil vorgesehen. Es kann jedoch auch vorgesehen sein, dass der Anschlussstutzen Bestandteil der Druckausgleichsleitung ist, sodass die Druckausgleichsleitung integral mit dem Füllstandsventil ausgebildet ist.

Das Tauchrohr ist derart bemessen, dass es ab Erreichen oder Überschreiten eines bestimmten Fluidpegels durch den momentan vorliegenden Fluidpegel in das Fluid eintaucht. Steigt der Fluidpegel in dem Fluidtank weiter an, so wird die in dem Fluidtank abseits des Tauchrohrs vorliegende Luft komprimiert. Ein Druckausgleich ist allein in dem Tauchrohr möglich, welches strömungstechnisch über die Druckausgleichsleitung an die Einfüllleitung angeschlossen ist. Aus diesem Grund steigt der Fluidpegel in dem Tauchrohr bei weiterem Einfüllen von Fluid schneller oder sogar wesentlich schneller als abseits des Tauchrohrs.

In dem Tauchrohr ist der durch den verengten Durchströmungsquerschnitt gebildete Strömungswiderstand angeordnet. Der Strömungswiderstand kann grundsätzlich beliebig ausgestaltet sein, beispielsweise liegt er als Blende, Drossel oder Düse vor. Er zeichnet sich durch den im Vergleich zu einem unmittelbar benachbarten Bereich des Tauchrohrs verengten Durchströmungsquerschnitt aus. Ein derartiger Strömungswiderstand weist einen stark medienabhängigen Druckverlust auf. Insbesondere ist der Druckverlust des Strömungswiderstands abhängig von Viskosität. Das bedeutet, dass der Strömungswiderstand der aus dem Fluidtank austretenden Luft einen deutlich geringeren Strömungswiderstand entgegensetzt als dem Fluid, welches eine größere Viskosität aufweist als die Luft.

Erreicht das in dem Tauchrohr aufsteigende Fluid den Strömungswiderstand, beispielsweise bei Erreichen eines maximal gewünschten Fluidpegels in dem Fluidtank durch den momentan vorliegenden Fluidpegel, so steigt der Druckverlust über den Strömungswiderstand hinweg schlagartig an, sodass eine Entlüftung des Fluidtanks über die Druckausgleichsleitung nahezu vollständig unterbunden ist. Zumindest ist jedoch der Massenstrom der Strömung durch die Druckausgleichsleitung ab diesem Zeitpunkt deutlich reduziert. Dies führt zu einem Ansteigen des Fluidpegels in der Einfüllleitung sowie zu einem Abschalten der Zapfeinrichtung.

Die beschriebene Ausgestaltung des Füllstandsventils ist zum einen äußerst einfach realisierbar. Zum anderen bietet sie über die beschriebenen Vorteile hinaus die Möglichkeit einer unkomplizierten Anpassung an ein anderes Fluid beziehungsweise an unterschiedliche Fluide. Aufgrund unterschiedlicher Dichten unterschiedlicher Fluide kann es notwendig sein, das Füllstandsventil auf das jeweils in dem Fluidtank zwischenzuspeichernde Fluid anzupassen. Dies ist bei herkömmlichen Füllstandsventilen mit großem Aufwand verbunden, weil beispielsweise ein Schwimmer des Füllstandsventils oder die gesamte Geometrie des Füllstandsventils anzupassen ist.

Bei dem erfindungsgemäßen Füllstandsventil ist es hingegen lediglich notwendig, den Durchströmungsquerschnitt des Strömungswiderstands an das jeweilige Fluid beziehungsweise dessen Dichte und/oder Viskosität anzupassen. Die weitere Geometrie des Füllstandsventils bleibt unverändert. Das bedeutet schlussendlich, dass die Geometrie der Fluidtankanordnung insgesamt äußerlich unverändert bleibt und sich lediglich der Durchströmungsquerschnitt des Strömungswiderstands in dem Füllstandsventil ändert.

Beispielsweise erfolgt das Herstellen des Füllstandsventils durch Spritzgießen, wobei der Strömungswiderstand mit ausgebildet wird, sodass der Strömungswiderstand dauerhafter Bestandteil des Füllstandsventils ist. Es kann jedoch auch vorgesehen sein, dass der Strömungswiderstand beispielsweise in Form eines Einsatzes vorliegt, welches separat von einem Grundkörper des Füllstandsventils ausgebildet wird. Dieser Einsatz wird nachfolgend in den Grundkörper des Füllstandsventils eingebracht, um das Füllstandsventil herzustellen. Durch entsprechende Wahl des Einsatzes kann das Füllstandsventil an das zu verwendende Fluid beziehungswiese dessen Dichte angepasst werden. Der Einsatz kann zum Beispiel als Blendeneinsatz, Drosseleinsatz oder Düseneinsatz ausgestaltet sein.

Insoweit betrifft die Erfindung auch einen Montagesatz für eine Vielzahl von Füllstandsventilen, wobei der Montagesatz eine Vielzahl von identischen Grundkörpern sowie mehrere unterschiedliche Ventileinsätze aufweist. Jeder der Ventileinsätze verfügt über den Strömungswiderstand, wobei sich die Durchströmungsquerschnitte dieser Strömungswiderstände für die einzelnen Ventileinsätze unterscheiden. Jedem Grundkörper wird nun zur Ausbildung des jeweiligen Füllstandventils einer der Ventileinsätze zugeordnet und in diesen eingebracht.

Eine weitere Ausgestaltung der Erfindung sieht vor, dass der Strömungswiderstand einen kleinsten Durchströmungsquerschnitt aufweist, der kleiner ist als der kleinste Durchströmungsquerschnitt des Anschlussstutzens und/oder der kleinste Durchströmungsquerschnitt des Tauchrohrs. Unter dem kleinsten Durchströmungsquerschnitt des jeweiligen Elements ist der in Durchströmungsrichtung über das gesamte jeweilige Element hinweg vorliegende kleinste Durchströmungsquerschnitt zu verstehen. Der kleinste Durchströmungsquerschnitt des Strömungswiderstands soll kleiner sein als der kleinste Durchströmungsquerschnitt des Anschlussstutzens. Zusätzlich oder alternativ kann er kleiner sein als der kleinste Durchströmungsquerschnitt des Tauchrohrs. Besonders bevorzugt ist der kleinste Durchströmungsquerschnitt des Strömungswiderstands kleiner als sowohl der kleinste Durchströmungsquerschnitt des Anschlussstutzens als auch der kleinste Durchströmungsquerschnitt des Tauchrohrs. Der Strömungswiderstand weist insoweit in Strömungsrichtung über das gesamte Füllstandsventil hinweg den kleinsten Durchströmungsquerschnitt auf beziehungsweise bildet diesen aus. Mit einer derartigen Ausgestaltung des Strömungswiderstands wird ein besonders deutliches Ansteigen des Druckverlusts bei dem Erreichen und/oder Durchströmen des Strömungswiderstands durch das Fluid erzielt.

Eine weitere bevorzugte Ausgestaltung der Erfindung sieht vor, dass der Strömungswidertand von einem Ringsteg gebildet ist, der eine bezüglich einer Längsmittelachse des Tauchrohrs parallel angeordnete Längsmittelachse aufweist. Der Ringsteg bildet insoweit eine Einschnürung des Strömungswegs durch das Füllstandsventil. Eine derartige Ausgestaltung des Strömungswiderstands ist äußerst einfach umzusetzen. Ein den Durchströmungsquerschnitt des Strömungswiderstands begrenzendes freies Ende des Ringstegs kann grundsätzlich im Längsschnitt bezüglich der Längsmittelachse gesehen beliebig geformt sein. Besonders bevorzugt liegt eine den Strömungswiderstand begrenzende Oberfläche der freien Enden des Ringstegs auf der Mantelfläche eines gedachten Zylinders, insbesondere eines gedachten Kreiszylinders. Das bedeutet, dass der Strömungswiderstand nach Art einer Blende oder einer Drossel ausgebildet ist.

Alternativ kann zur Ausgestaltung des Strömungswiderstands als Düse noch auch eine gekrümmte Oberfläche des freien Endes des Ringstegs vorgesehen sein. Die Längsmittelachse des Ringstegs beziehungsweise des Strömungswiderstands verläuft parallel zu der Längsmittelachse des Tauchrohrs. Besonders bevorzugt fallen die beiden Längsmittelachsen zusammen, sodass der Strömungswiderstand bezüglich des Tauchrohrs mittig angeordnet ist. Hierdurch werden eine besonders zuverlässige Entlüftung und auch ein zuverlässiges Erzeugen eines hohen Druckverlusts im Falle des Erreichens des Strömungswiderstands durch das Fluid bewirkt.

Eine weitere Ausführungsform der Erfindung sieht vor, dass an dem Tauchrohr ein Schwimmer verlagerbar gelagert ist, der in einer ersten Stellung zum Freigeben einer Strömungsverbindung durch einen Ventilsitz beabstandet von dem Ventilsitz vorliegt und in einer zweiten Stellung zum Unterbrechen der Strömungsverbindung durch den Ventilsitz mit dem Ventilsitz zusammenwirkt, insbesondere an dem Ventilsitz anliegt. Der Schwimmer ist insbesondere vorgesehen, falls bei gefülltem Fluidtank und/oder bei geringer Füllgeschwindigkeit und/oder einer Wärmeausdehnung des Fluids nicht lediglich der Druckverlust über den Strömungswiderstand beziehungsweise das Füllstandsventil erhöht werden soll, sondern ein vollständiges Unterbrechen der Strömungsverbindung durch das Füllstandsventil vorgesehen ist. Mithilfe des Schwimmers kann ein Austreten des Fluids durch das Füllstandventil in die Druckausgleichsleitung besonders zuverlässig verhindert werden.

Der Schwimmer ist derart ausgestaltet, dass er eine geringere Dichte aufweist als das Fluid, welches in dem Fluidtank zwischengespeichert werden soll. Erreicht das Fluid also den Schwimmer, so nimmt es den Schwimmer bei weiter ansteigendem Fluidpegel mit und drängt es aus der ersten Stellung heraus in Richtung der zweiten Stellung, welche insoweit geodätisch gesehen in Einbaulage des Füllstandsventils oberhalb der ersten Stellung liegt. Bei Erreichen eines bestimmten Fluidpegels in dem Fluidtank drängt das Fluid den Schwimmer in die zweite Stellung, sodass die Strömungsverbindung durch den Ventilsitz durch das Zusammenwirken des Ventilsitzes mit dem Schwimmer unterbrochen ist.

Der Schwimmer ist an und/oder in dem Tauchrohr verlagerbar gelagert. In der ersten Stellung ist der Schwimmer von dem Ventilsitz beabstandet angeordnet, sodass eine Strömungsverbindung durch den Ventilsitz freigegeben ist, insbesondere vollständig freigegeben ist. In der zweiten Stellung hingegen wirkt der Schwimmer mit dem Ventilsitz zusammen, um die Strömungsverbindung zu unterbrechen. Bevorzugt ist es hierbei vorgesehen, dass der Schwimmer in der zweiten Stellung an dem Ventilsitz anliegt, um diesen zu verschließen, sodass die Strömungsverbindung unterbrochen ist. Der Ventilsitz liegt strömungstechnisch zwischen einem Fluidtankinnenraum des Fluidtanks und der Druckausgleichsleitung, mithin also in dem Füllstandsventil vor.

Im Rahmen einer weiteren bevorzugten Ausgestaltung der Erfindung kann vorgesehen sein, dass der Ventilsitz im Längsschnitt gesehen von einem, insbesondere von dem Ringsteg ausgehenden, Axialsteg gebildet ist, der in axialer Richtung in das Tauchrohr hineinragt und von einem Innenumfang des Tauchrohr beabstandet angeordnet ist. Der Axialsteg erstreckt sich insoweit in axialer Richtung in das Tauchrohr hinein, beispielsweise ausgehend von einer Stirnseite des Tauchrohrs. Der Axialsteg ist in Umfangsrichtung bezüglich der Längsmittelachse des Tauchrohrs zur Ausbildung des Ventilsitzes vorzugsweise durchgehend ausgestaltet.

Der Axialsteg ist derart ausgebildet, dass der Schwimmer in seiner zweiten Stellung vorzugsweise in Umfangsrichtung durchgehend an dem Axialsteg anliegt, um die Strömungsverbindung durch den Ventilsitz zu unterbrechen. Der Axialsteg geht besonders bevorzugt von dem Ringsteg aus, ist also gemeinsam mit diesem ausgebildet. Insoweit liegt der Ventilsitz beispielsweise strömungstechnisch gesehen in dem Tauchrohr vor. Beispielsweise ist der Ventilsitz auf der dem Anschlussstutzen zugewandten Seite des Tauchrohrs ausgebildet.

Eine bevorzugte weitere Ausgestaltung der Erfindung sieht vor, dass der Schwimmer in der ersten Stellung in einem an dem Tauchrohr befestigten oder von dem Tauchrohr gebildeten Führungskäfig angeordnet ist, über den der Anschlussstutzen nach Anordnung des Tauchrohrs im Fluidtank mit einem Fluidtankinnenraum des Fluidtanks in Strömungsverbindung steht. Der Führungskäfig dient der Führung des Schwimmers, insbesondere einer linearen Führung des Schwimmers zwischen der ersten Stellung und der zweiten Stellung. Der Führungskäfig ist bevorzugt derart ausgebildet, dass er den Schwimmer in axialer Richtung bezüglich der Längsmittelachse des Tauchrohrs führt. Der Führungskäfig kann entweder an dem Tauchrohr befestigt oder von diesem gebildet sein. In ersterem Fall liegt der Führungskäfig als von dem Tauchrohr separates Element vor, wohingegen er in letzterem Fall Bestanteil des Tauchrohrs ist.

Der Führungskäfig ist fluiddurchlässig ausgebildet. Zudem ist er strömungstechnisch zwischen dem Anschlussstutzen und dem Fluidtank in einen Raum des Fluidtanks angeordnet. Entsprechend steht der Anschlussstutzen nach der Anordnung des Tauchrohrs in dem Fluidtank strömungstechnisch mit dem Fluidtankinnenraum über den Führungskäfig in Verbindung. Liegt der Führungskäfig als von dem Tauchrohr separates Element vor, so ist es beispielsweise vorgesehen, dass der Führungskäfig rastend mit dem Tauchrohr verbunden ist. Das bedeutet, dass der Führungskäfig und das Tauchrohr über Rastmittel verfügen, mittels welchen eine vorzugsweise lösbare Verbindung des Führungskäfigs an dem Tauchrohr bewirkt werden kann. Alternativ kann der Führungskäfig auch einstückig mit dem Tauchrohr ausgebildet sein. In diesem Fall ist der Führungskäfig zusätzlich bevorzugt materialeinheitlich mit dem Tauchrohr ausgebildet.

Eine Weiterbildung der Erfindung sieht vor, dass der Schwimmer auf seiner dem Ventilsitz abgewandten Seite einen Hohlraum aufweist, der in die dem Ventilsitz abgewandte Richtung offen ist. Der Hohlraum stellt eine besonders geringe Dichte des Schwimmers sicher, sodass er zuverlässig auf dem Fluid aufschwimmt. Der Hohlraum ist in geodätisch gesehen in Einbaulage des Füllstandsventils nach unten offen, also in die dem Ventilsitz abgewandte Richtung. Erreicht das aufsteigende Fluid den Schwimmer, so wird zunächst die Mündungsöffnung des Hohlraums durch das Fluid verschlossen, sodass die in dem Hohlraum vorliegende Luft nicht mehr aus diesem entweichen kann. Bei weiter ansteigendem Fluidpegel wird der Schwimmer insbesondere aufgrund der in dem Hohlraum vorliegenden Luft und der daraus resultierenden geringen Gesamtdichte des Schwimmers von dem Fluid in Richtung des Ventilsitzes gedrängt.

Bevorzugt ist eine Ausgestaltung der Erfindung, gemäß welcher eine Mantelfläche des Schwimmers wenigstens einen in den Hohlraum einmündenden, randoffenen Schlitz aufweist. Unter der Mantelfläche ist eine den Hohlraum in radialer Richtung nach außen begrenzende Fläche beziehungsweise Wand zu verstehen. In der Mantelfläche liegt der Schlitz vor, welcher in radialer Richtung die Mantelfläche vollständig durchgreift, sodass der Schlitz einerseits in den Hohlraum einmündet und die Mantelfläche in radialer Richtung nach außen vollständig durchgreift. Der Schlitz ist randoffen ausgestaltet, nämlich in die von dem Ventilsitz abgewandte Richtung. Entsprechend durchgreift der Schlitz einen Rand des Schwimmers, der dem Ventilsitz abgewandt ist. Durch die Erstreckung des Schlitzes in axialer Richtung kann der Schwimmer auf einfache Art und Weise auf das jeweils zu verwendende Fluid beziehungsweise dessen Dichte eingestellt werden.

Eine weitere Ausführungsform der Erfindung sieht vor, dass eine Mantelfläche des Tauchrohrs wenigstens einen die von dem Anschlussstutzen abgewandte Richtung randoffenen Schlitz aufweist. Auch ein derartiger Schlitz kann dem Einstellen des Füllstandsventils auf das verwendete Fluid beziehungsweise dessen Dichte dienen. Der Schlitz durchgreift eine Wand des Tauchrohrs in radialer Richtung vollständig. Der Schlitz beginnt auf der dem Anschlussstutzen abgewandten Seite des Tauchrohrs und durchgreift diese, sodass der Schlitz randoffen ausgebildet ist. Über diesen Schlitz kann auch dann ein Druckausgleich zwischen dem Fluidtank abseits des Tauchrohrs und der Einfüllleitung über die Druckausgleichsleitung erfolgen, wenn das aufsteigende Fluid das Tauchrohr beziehungsweise sein unteres Ende bereits erreicht hat. Das Vorsehen des Schlitzes ermöglicht das Einstellen des Füllstandsventils ohne Änderungen der Geometrie des Füllstandsventils, insbesondere der äußeren Geometrie des Füllstandsventils.

Eine weitere Ausführungsform der Erfindung sieht vor, dass der Schwimmer zur Lagerung Flügel aufweist, die von einem Grundkörper des Schwimmers ausgehen, wobei die Flügel zur Beabstandung des Grundkörpers von dem Innenumfang des Tauchrohrs ausgebildet sind. Der Schwimmer weist insoweit den Grundkörper und die Flügel auf, wobei sich die Flügel ausgehend von dem Grundkörper in radialer Richtung nach außen erstrecken. Der Grundkörper ist derart bemessen, dass er in radialer Richtung kleiner ist als die Innenabmessungen des Tauchrohrs. Entsprechend kann er von den Flügeln von dem Innenumfang des Tauchrohrs beabstandet werden. Bevorzugt sind die Flügel derart ausgestaltet und angeordnet, dass sie den Grundkörper gleichmäßig von dem Innenumfang des Tauchrohrs beabstanden, sodass sich also der Abstand des Grundkörpers von dem Innenumfang des Tauchrohrs in Umfangsrichtung nicht oder zumindest nicht wesentlich ändert. Beispielsweise sind hierzu wenigstens vier Flügel vorgesehen, welche gleichmäßig über den Umfang des Grundköpers verteilt angeordnet sind. Eine derartige Ausgestaltung des Schwimmers ermöglicht eine besonders einfache Lagerung desselben, wobei gleichzeitig sichergestellt ist, dass Luft und Fluid ohne weiteres den Schwimmer passieren können, insbesondere solange dieser außerhalb seiner zweiten Stellung vorliegt.

Eine Weiterbildung der Erfindung sieht vor, dass sich der Schwimmer in der ersten Stellung an einer Bodenplatte abstützt, die auf der dem Anschlussstutzen abgewandten Seite an dem Tauchrohr angeordnet ist. Die Bodenplatte weist insoweit eine Standfläche für den Schwimmer auf, welche einen Endanschlag für den Schwimmer bildet. Beispielsweise wird der Schwimmer in Einbaulage des Füllstandsventils von einem auf ihn wirkenden Schwerkrafteinfluss in Richtung der Bodenplatte beziehungsweise an diese gedrängt. Die Bodenplatte ist auf der dem Anschlussstutzen abgewandten Seite an dem Tauchrohr angeordnet, insbesondere an dem dem Anschlussstutzen abgewandten Ende des Tauchrohrs.

Bevorzugt ist es vorgesehen, dass die Bodenplatte eine strukturierte Standfläche für den Schwimmer aufweist. Auf das Vorliegen der Standfläche an der Bodenplatte wurde bereits hingewiesen. Um ein Anhaften des Schwimmers an der Bodenplatte bei einem Ansteigen des Fluidpegels zu verhindern, soll die Standfläche strukturiert sein. Darunter ist zu verstehen, dass die Standfläche beispielsweise gerippt oder genoppt ist. Sie kann auch jede andere Oberflächenstruktur aufweisen, welche dazu geeignet ist, das Anhaften des Schwimmers an der Standfläche zu verhindern.

Schließlich kann im Rahmen einer weiteren bevorzugten Ausgestaltung der Erfindung vorgesehen sein, dass ein die Bodenplatte durchgreifende Ausnehmung den Strömungswiderstand bildet. Das bedeutet schlussendlich, dass der Strömungswiderstand bezüglich einer Durchströmungsrichtung des Füllstandsventils ausgehend von dem Fluidtank in Richtung des Anschlussstutzens stromaufwärts des Schwimmers angeordnet ist. Bei einer derartigen Ausgestaltung wird ein vergleichsweise langsames Anheben des Schwimmers realisiert, weil das ansteigenden Fluid den Strömungswiderstand passieren muss, bevor es den Schwimmer anheben kann. Durch das Erreichen des Strömungswiderstands durch das Fluid wird also bereits der Druckverlust über das Füllstandsventil derart erhöht, dass die Zapfeinrichtung das Befüllen des Fluidtanks unterbricht. Erst bei weiterem Ansteigen des Fluidpegels in den Fluidtank, beispielsweise durch ein erzwungenes Befüllen des Fluidtanks oder bei einer defekten Zapfeinrichtung, wird die Strömungsverbindung durch das Füllstandventil mittels des Schwimmers vollständig unterbrochen. Dies gewährleistet eine besonders hohe Funktionssicherheit des Füllstandsventils.

Besonders bevorzugt ist es vorgesehen, dass eine gedachte Verlängerung der Ausnehmung beabstandet von dem Schwimmer verläuft. Bei einer Durchströmung der Ausnehmung durch Luft und/oder Fluid kann es zu einem Anheben des Schwimmers kommen, falls die Luft beziehungsweise das Fluid unmittelbar auf den Schwimmer trifft. Entsprechend soll die Ausnehmung derart angeordnet sein, dass die durch sie hindurchtretende Luft beziehungsweise das durch sie hindurchtretende Fluid nicht auf den Schwimmer trifft. Dies wird durch die beabstandete Anordnung der gedachten Verlängerung der Ausnehmung von dem Schwimmer realisiert.

Weiterhin kann es im Rahmen einer weiteren Ausgestaltung der Erfindung vorgesehen sein, dass zur Lagerung des Schwimmers Führungsstege von der Bodenplatte ausgehend, die zumindest in der ersten Stellung des Schwimmers an einem Außenumfang des Schwimmers oder an einem den Hohlraum begrenzenden Innenumfang des Schwimmers anliegen. Bei einer derartigen Ausgestaltung des Füllstandsventils kann auf eine Lagerung des Schwimmers mittels der Flügel verzichtet werden. Vielmehr sind lediglich die Führungsstege vorgesehen. Diese sind bevorzugt in Umfangsrichtung gleichmäßig verteilt angeordnet.

Beispielsweise liegen wenigstens vier Führungsstege vor. Die Führungsstege gehen von der Bodenplatte aus und erstrecken sich in Richtung des Anschlussstutzens und mithin in das Tauchrohr hinein. Sie sind derart ausgestaltet beziehungsweise angeordnet, dass sie zumindest in der ersten Stellung an dem Außenumfang oder dem Innenumfang des Schwimmers anliegen. Das Anliegen an dem Außenumfang ermöglicht ein besonders zuverlässiges und verkippungsfreies Führen des Schwimmers, wohingegen das Anliegen an dem Innenumfang eine besonders platzsparende Lagerung umsetzt.

Die Erfindung betrifft weiterhin eine Fluidtankanordnung, mit einem Fluidtank, einer an einer Mündungsstelle in den Fluidtank einmündenden Einfüllleitung und einer Druckausgleichsleitung, die beabstandet von der Mündungsstelle einerseits an den Fluidtank strömungstechnisch angeschlossen ist und andererseits in die Einfüllleitung einmündet, wobei die Druckausgleichsleitung über ein Füllstandsventil, insbesondere ein Füllstandsventil gemäß den Ausführungen im Rahmen dieser Beschreibung, an den Fluidtank angeschlossen ist, das einen an dem Fluidtank angeordneten Anschlussstutzen aufweist, von dem ein in dem Fluidtank angeordnetes Tauchrohr ausgeht, das strömungstechnisch an den Anschlussstutzen angeschlossen ist, wobei in dem Tauchrohr ein durch einen verengten Durchströmungsquerschnitt gebildeter Strömungswiderstand vorliegt. Dabei ist vorgesehen, dass das Füllstandsventil derart ausgestaltet ist, dass ab einem Erreichen des Tauchrohrs durch ein Fluid aufgrund eines nur in dem Tauchrohr möglichen Druckausgleichs bei einem weiteren Einfüllen von Fluid in den Fluidtank ein Fluidpegel in dem Tauchrohr schneller ansteigt als abseits des Tauchrohrs und das Fluid den Strömungswiederstand erreicht, bevor der Schwimmer mit dem Ventilsitz zum Unterbrechen der Strömungsverbindung durch das Füllstandsventil zusammenwirkt, sodass sich der Druckverlust über das Füllstandsventil bei Erreichen des Strömungswiderstands durch das Fluid zum Unterbinden oder Einschränken des Entlüftens des Fluidtanks durch das Füllstandsventil erhöht.

Auf die Vorteile einer derartigen Ausgestaltung des Füllstandsventils beziehungsweise der Fluidtankanordnung wurde bereits hingewiesen. Sowohl die Fluidtankanordnung als auch das Füllstandsventil können gemäß den Ausführungen im Rahmen dieser Beschreibung weitergebildet sein, sodass insoweit auf diese verwiesen wird.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Schnittdarstellung durch eine Fluidtankanordnung, die einen Fluidtank, eine Einfüllleitung, eine Druckausgleichsleitung sowie ein Füllstandventil aufweist,
- Figur 2: eine schematische Schnittdarstellung durch einen Bereich der Fluidtankanordnung, wobei das Füllstandsventil in einer ersten Ausführungsform vorliegt,
- Figur 3: eine Schnittdarstellung durch einen Bereich der Fluidtankanordnung, wobei das Füllstandsventil in einer zweiten Ausführungsform vorliegt und einen Schwimmer aufweist,
- Figur 4: eine schematische Schnittteildarstellung des Schwimmers,
- Figur 5: eine schematische Darstellung des Füllstandsventils in einer dritten Ausführungsform,
- Figur 6: eine Schnittdarstellung durch einen Bereich der Fluidtankanordnung, wobei das Füllstandsventil in einer vierten Ausführungsform vorliegt,
- Figur 7: eine schematische Schnittdarstellung des Füllstandsventils in einer fünften Ausführungsform,
- Figur 8: eine schematische Darstellung des Füllstandsventils in einer sechsten Ausführungsform, sowie
- Figur 9: eine schematische Schnittdarstellung des Füllstandsventils in einer siebten Ausführungsform.

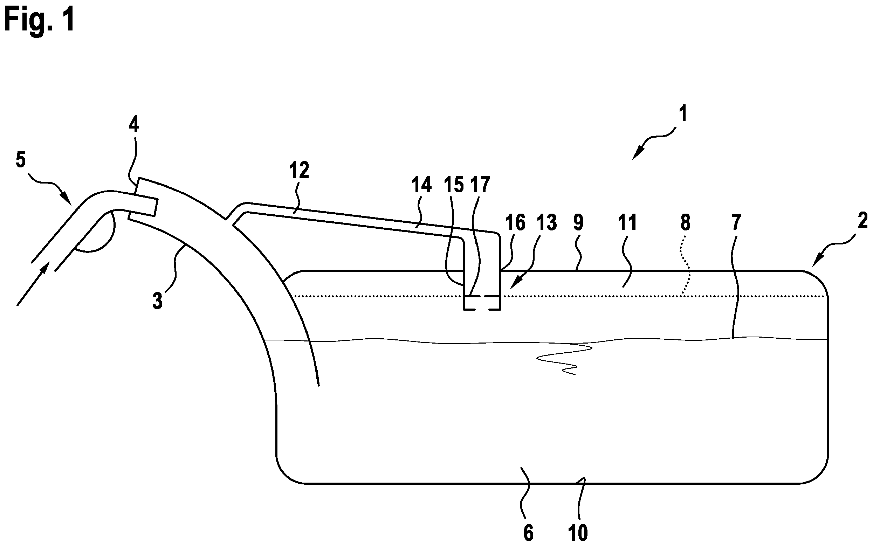

Die Figur 1 zeigt eine schematische Darstellung einer Fluidtankanordnung 1, die einen Fluidtank 2 aufweist, an welchen eine Einfüllleitung 3 strömungstechnisch angeschlossen ist. Die Einfüllleitung 3 weist auf ihre dem Fluidtank 2 abgewandten Seite einen Einfüllstutzen 4 auf, der zur Aufnahme einer Zapfeinrichtung 5 vorgesehen und ausgebildet ist. Mittels der Zapfeinrichtung 5 kann durch die Einfüllleitung 3 ein Fluid 6 in den Fluidtank 2 eingebracht werden. Rein beispielhaft ist ein Fluidpegel 7 des Fluids 6 in dem Fluidtank 2 angedeutet. Ebenfalls dargestellt ist ein maximal zulässiger Fluidpegel 8. Es ist erkennbar, dass die Einfüllleitung 3 beabstandet von einem Tankdach 9 und einem Tankboden 10 in den Fluidtank 2 einmündet, beispielsweise mittig zwischen dem Tankdach 9 und dem Tankboden 10.

Bei einem Betanken des Fluidtanks 2 durch die Einfüllleitung 3 steigt der Fluidpegel 7 in dem Fluidtank 2 an. In dem Fluidtank 2 befindliche Luft 11 wird von dem Fluid 6 verdrängt. Weil jedoch die Einfüllleitung 3 beabstandet von dem Tankdach 9 in den Fluidtank 2 einmündet, kann die Luft 11 ab einem bestimmten Fluidpegel 7 nicht mehr durch die Einfüllleitung 3 entweichen. Aus diesem Grund ist die Druckausgleichsleitung 12 vorgesehen, die strömungstechnisch an die Einfüllleitung 3 und dem Fluidtank 2 angeschlossen ist. Vorzugsweise mündet die Druckausgleichsleitung 12 durch das Tankdach 9 in den Fluidtank 2 ein, sodass auch noch bei sehr hohem Fluidpegel 7 die Luft 11 durch die Druckausgleichsleitung 12 aus dem Fluidtank 2 entweichen kann.

Um ein Überfüllen des Fluidtanks 2 mit dem Fluid 6 zu verhindern, ist die Druckausgleichsleitung 12 über ein Füllstandsventil 13 an den Fluidtank 2 strömungstechnisch angeschlossen. Das Füllstandsventil 13 ist derart ausgebildet, dass es ein Entlüften des Fluidtanks 2 ab dem Erreichen eines bestimmten Fluidpegels 7, welche beispielsweise dem Fluidpegel 8 entspricht, erschwert oder sogar gänzlich unterbindet. Dies wird von der Zapfeinrichtung 5 festgestellt, woraufhin sie das Befüllen des Fluidtanks 2 mit Fluid 6 beendet. Hierzu ist die Zapfeinrichtung 5 entsprechend ausgebildet.

Das Füllstandsventil 13 verfügt über einen Anschlussstutzen 14, an welchen die Einfüllleitung 3 angeschlossen ist oder welcher einen Bestandteil der Einfüllleitung 3 bildet. Der Anschlussstutzen 14 ist außerhalb des Fluidtanks 2 angeordnet, vorzugsweise vollständig. Von dem Anschlussstutzen 14 geht ein Tauchrohr 15 aus, das in den Fluidtank 2 hineinragt, beispielsweise durch eine entsprechende Tanköffnung 16. Das Tauchrohr 15 ist strömungstechnisch an den Anschlussstutzen 14 und mithin an die Druckausgleichsleitung 12 angeschlossen. Liegt das Fluid 6 beabstandet von dem Tauchrohr 15 in dem Fluidtank 2 vor, weil der Fluidpegel 7 ausreichend niedrig ist, so kann bei dem Betanken des Fluidtanks 2 mit Fluid 6 die verdrängte Luft aus dem Fluidtank 2 durch das Tauchrohr 15 beziehungsweise das Füllstandsventil 13 aus dem Fluidtank 2 entweichen.

Hat das Fluid 6 das Tauchrohr 15 erreicht, so kann die abseits des Tauchrohrs 15 in dem Fluidtank 2 vorliegende Luft 11 nicht weiter entweichen. Lediglich die in dem Tauchrohr 15 noch enthaltene Luft 11 kann durch die Druckausgleichsleitung 12 in Richtung der Einfüllleitung 3 strömen. Hieraus folgt, dass das Fluid 6 in dem Tauchrohr 15 schneller aufsteigt als in dem Fluidtank 2 abseits des Tauchrohrs 15. Um ein zuverlässiges Beenden des Befüllens des Fluidtanks 2 beziehungsweise ein zuverlässiges Abschalten der Zapfeinrichtung 5 zu erzielen, ist in dem Tauchrohr 15 ein Strömungswiderstand 17 ausgebildet, welcher hier als Blende angedeutet ist.

Ein solcher Strömungswiderstand 17 weist einen Druckverlust auf, welcher stark von der Viskosität des ihn durchströmenden Mediums abhängig ist. Das bedeutet schlussendlich, dass der Strömungswiderstand 17 für die Luft 11 einen deutlich geringeren Widerstand darstellt als für das Fluid 6. Anders ausgedrückt kann die Luft 11 den Strömungswiderstand 17 nahezu ungehindert passieren. Erreicht jedoch das Fluid 6 den Strömungswiderstand 17, so erhöht sich der Druckverlust schlagartig und deutlich. Entsprechend wird mit dem Erreichen des Strömungswiderstands 17 durch das Fluid 6 das Entlüften des Fluidtanks 2 durch das Füllstandsventil 13 nahezu vollständig unterbunden oder zumindest deutlich eingeschränkt. Dies wird von der Zapfeinrichtung 5 erkannt, welche daraufhin das Betanken des Fluidtanks 2 mit Fluid 6 einstellt.

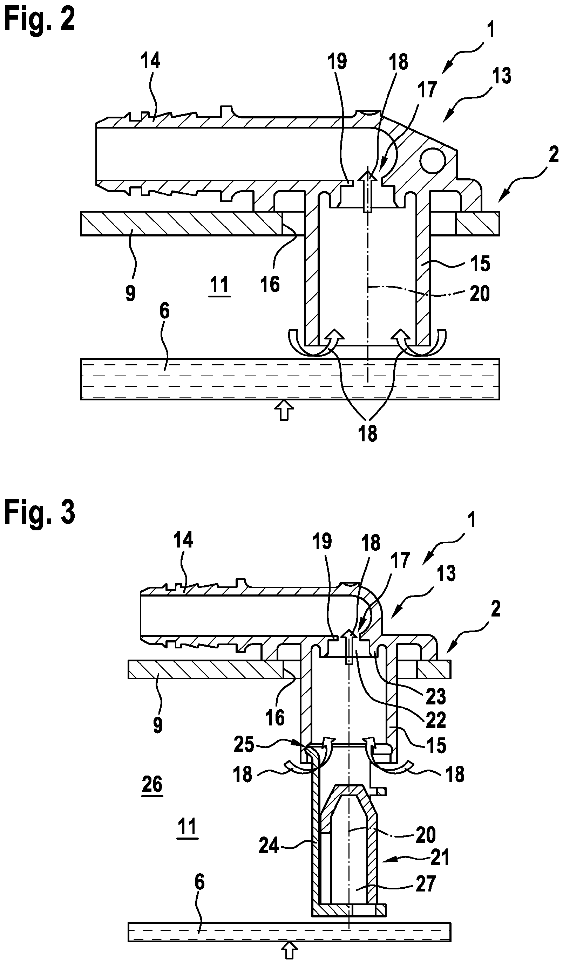

Die Figur 2 zeigt eine schematische Schnittdarstellung durch einen Bereich der Fluidtankanordnung 1, wobei das Füllstandsventil 13 in der bereits vorstehend beschriebenen ersten Ausführungsform vorliegt. Dargestellt ist ein Fluidpegel 7, bei welchem das Fluid 6 beabstandet von dem Tauchrohr 15 vorliegt. Entsprechend kann die Luft 11 gemäß den Pfeilen 18 ohne weiteres durch den Strömungswiderstand 17 hindurch aus dem Fluidtank 2 entweichen. Es ist erkennbar, dass der Strömungswiderstand 17 einen kleinsten Durchströmungsquerschnitt aufweist, der kleiner ist als der kleinste Durchströmungsquerschnitt des Anschlussstutzens 14 sowie als der kleinste Durchströmungsquerschnitt des Tauchrohrs 15. Beispielsweise beträgt der kleinste Durchströmungsquerschnitt des Strömungswiderstands 17 bezogen auf den kleinsten Durchströmungsquerschnitt des Tauchrohrs 15 höchstens 10 %, höchstens 15 %, höchstens 20 % oder höchstens 25 %.

Der Strömungswiderstand 17 stellt in jedem Fall lediglich eine temporäre Einschnürung des Strömungswegs dar. Das bedeutete, dass sowohl der Durchströmungsquerschnitt des Anschlussstutzens 14 als auch der Durchströmungsquerschnitt des Tauchrohrs 15 größer sind als der kleinste Durchströmungsquerschnitt des Strömungswiderstands 17. Bevorzugt ist hierbei der (minimale) Durchströmungsquerschnitt des Tauchrohrs 15 größer als der (minimale) Durchströmungsquerschnitt des Anschlussstutzens 14, beispielsweise um wenigstens 25 %, wenigstens 50 %, wenigstens 75 % oder wenigstens 100 % oder mehr. Der Strömungswiderstand 17 wird von einem Ringsteg 19 gebildet, der eine bezüglich einer Längsmittelachse 20 des Tauchrohrs 15 parallel angeordnete Längsmittelachse aufweist. Vorzugsweise ist der Strömungswiderstand 17 bezüglich der Längsmittelachse 20 mittig angeordnet.

Die Figur 3 zeigt eine schematische Schnittdarstellung durch einen Bereich der Fluidtankanordnung 1, wobei das Füllstandsventil 13 in einer zweiten Ausführungsform vorliegt. Grundsätzlich wird auf die Ausführungen zu der ersten Ausführungsform hingewiesen. Zusätzlich zu dieser verfügt das Füllstandsventil 13 der zweiten Ausführungsform über einen Schwimmer 21, der an dem Tauchrohr 15 verlagerbar gelagert ist. Der Schwimmer 21 ist derart ausgestaltet, dass in der hier dargestellten ersten Stellung zum Freigeben einer Strömungsverbindung durch einen Ventilsitz 22 beabstandet von dem Ventilsitz 22 vorliegt. In einer zweiten Stellung des Schwimmers 21 hingegen wirkt er zum Unterbrechen der Strömungsverbindung durch den Ventilsitz 22 mit eben diesem zusammen, vorzugsweise indem er an dem Ventilsitz 22 anliegt.

Der Ventilsitz 22 ist in dem hier dargestellten Ausführungsbeispiel von einem Axialsteg 23 ausgebildet, welcher sich ausgehend von dem Ringsteg 19 in axialer Richtung dem Schwimmer 21 entgegenerstreckt. Der Axialsteg 23 ist zur Ausbildung des Ventilsitzes 22 in Umfangsrichtung durchgehend ausgebildet, sodass der Schwimmer 21 in seiner zweiten Stellung in Umfangsrichtung durchgehend dichtend an dem Axialsteg 23 zum Unterbrechen der Strömungsverbindung durch den Ventilsitz 22 zusammenwirkt. Der Schwimmer 21 ist in einem Führungskäfig 24 verlagerbar gelagert, wobei der Führungskäfig 24 rastend an dem Tauchrohr 15 verbunden ist. Hierzu sind entsprechende Rastmittel 25 vorgesehen. Der Führungskäfig 24 ist fluiddurchlässig, sodass schlussendlich der Anschlussstutzen 14 über den Führungskäfig 24 und das Tauchrohr 15 in Strömungsverbindung mit einem Tankinnenraum 26 steht, in welchem das Fluid 6 und die Luft 11 vorliegen.

Dargestellt ist wiederum ein Fluidpegel 7, bei welchem das Fluid 6 beabstandet von dem Tauchrohr 15 und zusätzlich beabstandet zu dem Schwimmer 21 vorliegt. Entsprechend kann die Luft 11 gemäß den Pfeilen 18 durch den Ventilsitz 22 und den Strömungswiderstand 17 strömen und in den Anschlussstutzen 14 gelangen. Erreicht das Fluid 6 den Schwimmer 21, so beginnt das Fluid 6 den Schwimmer 21 anzuheben. Dies insbesondere aufgrund eines in dem Schwimmer 21 ausgebildeten Hohlraums 27, welcher luftgefüllt ist und entsprechend für eine geringe Gesamtdichte des Schwimmers 21 sorgt. Der Hohlraum 27 ist in die dem Ventilsitz 22 abgewandte Richtung geöffnet. Erreicht also das Fluid 6 den Schwimmer 21, so verschließt es zunächst den Hohlraum 27, sodass die darin befindliche Luft nicht mehr aus dem Hohlraum 27 entweichen kann, und drängt den Schwimmer 21 in Richtung des Ventilsitzes 22.

Erreicht das Fluid 6 zusätzlich das Tauchrohr 15, so steigt es in diesem rascher auf als ab abseits des Tauchrohrs 15. Entsprechend wird auch der Schwimmer 21 rascher in Richtung des Ventilsitzes 22 gedrängt. Hat der Schwimmer 21 den Ventilsitz 22 erreicht, so wird der Strömungsweg durch das Füllstandsventil 13 vollständig unterbrochen. Es ist vorgesehen, dass das Fluid 6 den Strömungswiderstand 17 erreicht, bevor der Schwimmer 21 mit dem Ventilsitz 22 zum Unterbrechen der Strömungsverbindung durch das Füllstandsventil 13 zusammenwirkt. Entsprechend wird bereits zu diesem Zeitpunkt der Strömungswiderstand durch das Füllstandsventil 13 derart erhöht, dass das die Zapfeinrichtung 5 das Betanken des Fluidtanks 2 beendet.

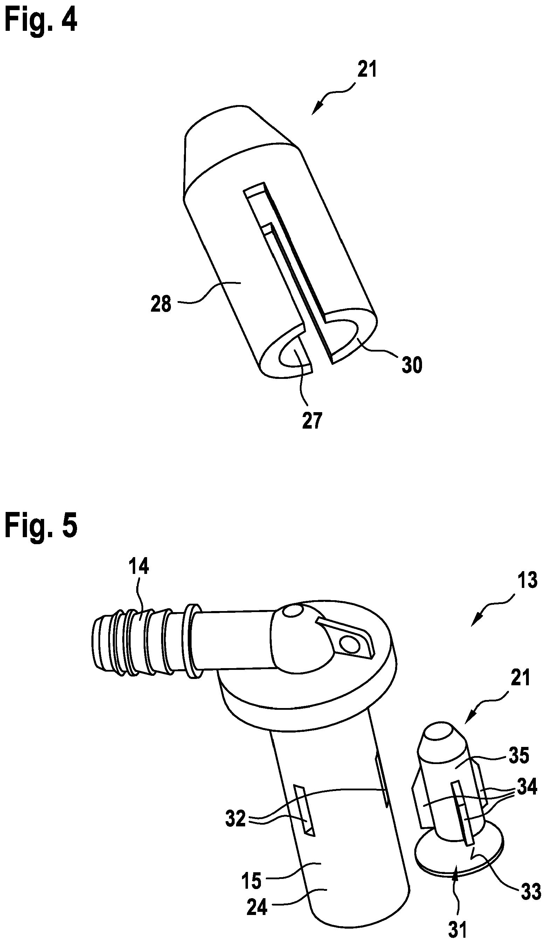

Die Figur 4 zeigt eine schematische Darstellung des Schwimmers 21. Es wird deutlich, dass in einer Mantelfläche 28 des Schwimmers 21 wenigstens ein Schlitz 29 (in dem hier dargestellten Ausführungsbeispiel: zwei Schlitze 29) ausgebildet sind. Der wenigstens eine Schlitz 29 durchgreift die Mantelfläche 28 in radialer Richtung vollständig, mündet also in den Hohlraum 27 ein. Der Schlitz 29 ist zudem randoffen ausgebildet, er durchgreift hierzu einen unteren Rand 30 des Schwimmers 21 beziehungsweise der Mantelfläche 28. Durch Veränderung des Rands 30 kann der Schwimmer 21 auf einfache Art und Weise an das verwendete Fluid 6 beziehungsweise die Dichte des Fluids 6 angepasst werden.

Die Figur 5 zeigt eine schematische Darstellung des Füllstandsventils 13 in einer dritten Ausführungsform. Auf die vorstehenden Ausführungen wird wiederum hingewiesen und nachfolgend lediglich auf die Unterschiede eingegangen. Diese liegen darin, dass der Führungskäfig 24 von dem Tauchrohr 15 gebildet ist. Das Tauchrohr 15 ist auf seiner dem Anschlussstutzen 14 abgewandten Seite mit einer Bodenplatte 31 verschlossen. Aus diesem Grund verfügt das Tauchrohr 15 über wenigstens eine Fluidöffnung 32, vorzugsweise über mehrere Fluidöffnungen 32. Über die Fluidöffnung 32 können Fluid 6 und Luft 11 aus dem Tankinnenraum 26 in Richtung des Anschlussstutzens 14 strömen, solange der Schwimmer 21 beabstandet von dem hier nicht erkennbaren Ventilsitz 22 vorliegt.

Die Bodenplatte 31 weist eine Standfläche 33 für den Schwimmer 21 auf, auf welcher er in seiner ersten Stellung aufsitzt. Die Standfläche 33 ist vorzugsweise strukturiert, um ein Anhaften des Schwimmers 21 an der Standfläche 23 zu verhindern. Eine Führung des Schwimmers 21 wird mittels mehrerer Flügel 34 erzielt, welche von einem Grundkörper 35 des Schwimmers 21 ausgehen und sich in radialer Richtung nach außen erstrecken. Die Flügel 34 sind derart ausgestaltet, dass sie an einen hier nicht erkennbaren Innenumfang 36 des Tauchrohrs 15 zur Führung des Schwimmers 21 anliegen.

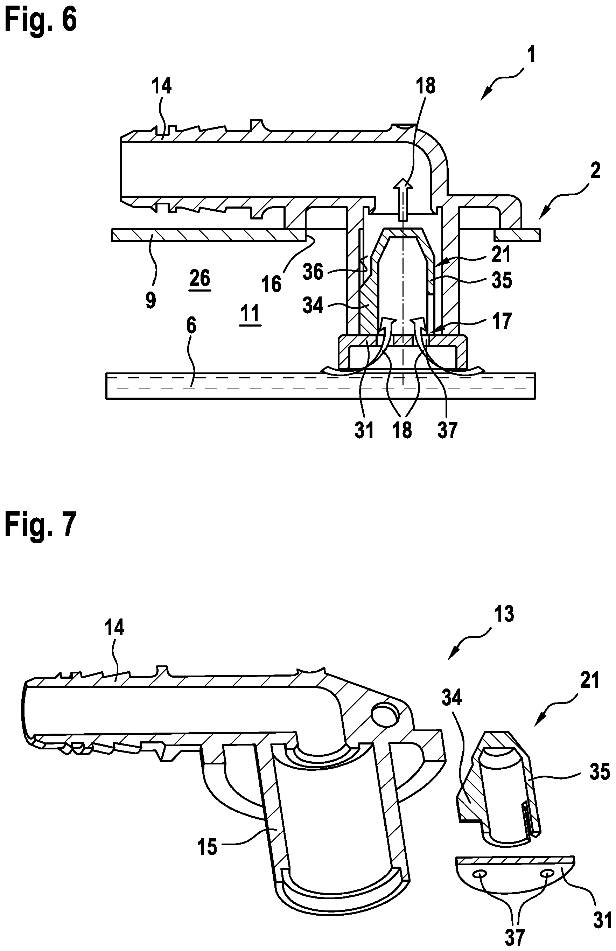

Die Figur 6 zeigt eine schematische Schnittdarstellung durch einen Bereich der Fluidtankanordnung 1, wobei das Füllstandsventil 13 in einer vierten Ausführungsform vorliegt. Erneut wird auf die vorstehenden Ausführungen Bezug genommen und nachfolgend auf die Unterschiede eingegangen. Diese liegen darin, dass der Strömungswiderstand 17 nunmehr von einer Ausnehmung 37 gebildet ist, welche die Bodenplatte 31 durchgreift. Bevorzugt sind mehrere dieser Ausnehmungen 37 in der Bodenplatte 31 ausgebildet.

Die Figur 7 zeigt eine schematische Schnittdarstellung einer fünften Ausführungsform des Füllstandsventils 13. Diese unterscheiden sich von der vorstehend beschriebenen lediglich durch die Ausgestaltung der Bodenplatte 31, sodass erneut auf die vorstehenden Ausführungen Bezug genommen wird. Es wird deutlich, dass die Ausnehmungen 37 in der Bodenplatte 31 derart angeordnet sind, dass gedachte Verlängerungen der Ausnehmungen 37 beabstandet von dem Schwimmer 21 oder zumindest dessen Grundkörper 35 verlaufen. Durch diese Ausgestaltung der Bodenplatte 31 wird eine Beeinflussung des Schwimmers 21 durch die Ausnehmungen 37 hindurchtretende Luft 11 und/oder hindurchtreten des Fluid 6 weitestgehend vermieden.

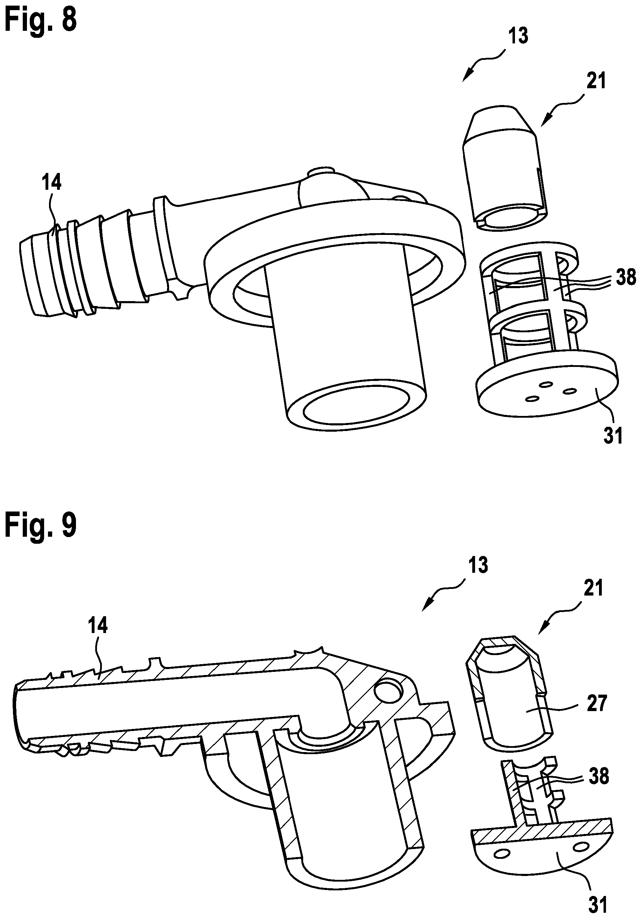

Die Figur 8 zeigt eine schematische Darstellung des Füllstandsventils 13 in einer sechsten Ausführungsform. Auf die vorstehenden Ausführungen wird Bezug genommen und nachfolgend lediglich auf die Unterschiede hingewiesen. Diese liegen in der Führung des Schwimmers 21. Diese erfolgt nicht mehr mittels der Flügel 34, welche entsprechend vollständig entfallen. Stattdessen gehen von der Bodenplatte 31 Führungsstege 38 aus, die den Schwimmer 21 zumindest in seiner ersten Stellung, vorzugsweise jedoch permanent, führend umgreifen und entsprechend an ihm anliegen. Die Bodenplatte 31 wird bei einer Montage des Füllstandsventils 13 derart angeordnet, dass die Führungsstege 38 in dem Tauchrohr 15 aufgenommen sind. Die Bodenplatte 31 verschließt insoweit erneut das Tauchrohr 15 auf seiner dem Anschlussstutzen 14 abgewandten Seite.

Die Figur 9 zeigt eine schematische Darstellung einer siebten Ausführungsform des Füllstandsventils 13. Auf die vorstehenden Ausführungen wird Bezug genommen und nachfolgend lediglich auf die Unterschiede eingegangen. Diese liegen erneut in der Führung des Schwimmers 21. Im Gegensatz zu der vorstehend beschriebenen Ausführungsform liegen die von der Bodenplatte 31 ausgehenden Führungsstege 38 nun nicht mehr an einem Außenumfang des Schwimmers 21 an, sondern vielmehr an einem Innenumfang, welcher den Hohlraum 27 in radialer Richtung nach außen begrenzt. Dies ermöglicht eine äußerst platzsparende Realisierung der Führung. Die Bodenplatte 31 ist wiederum derart an dem Tauchrohr 15 befestigt, dass die Bodenplatte 31 dieses auf seiner dem Anschlussstutzen 14 abgewandten Seite verschließt und die Führungsstege 38 in dem Tauchrohr 15 aufgenommen sind.

Die beschriebenen Ausgestaltungen des Füllstandventils 13 ermöglichen allesamt ein besonders einfaches Einstellen des Füllstandsventils 13 auf das jeweils verwendete Fluid 6 beziehungsweise dessen Dichte. Insbesondere kann das Anpassen ohne eine Änderung der äußeren Geometrie des Füllstandventils 13 erfolgen und besonders bevorzugt ohne eine Änderung der äußeren Geometrie der Fluidtankanordnung 1. Entsprechend ist das Füllstandventil 13 äußerst universell einsetzbar.

## Patentansprüche

1. Füllstandsventil (13) für eine Druckausgleichsleitung (12) einer Fluidtankanordnung (1), wobei die Druckausgleichsleitung (12) zwischen einem Fluidtank (2) und einer in den Fluidtank (2) einmündenden Einfüllleitung (3) strömungstechnisch angeschlossen ist, wobei das Füllstandsventil (13) einen an dem Fluidtank (2) anordenbaren Anschlussstutzen (14) aufweist, von dem ein in dem Fluidtank (2) anordenbares Tauchrohr (15) ausgeht, das strömungstechnisch an den Anschlussstutzen (14) angeschlossen ist, wobei in dem Tauchrohr (15) ein durch einen verengten Durchströmungsquerschnitt gebildeter Strömungswiderstand (17) vorliegt, **dadurch gekennzeichnet, dass** das Füllstandsventil (13) derart ausgestaltet ist, dass ab einem Erreichen des Tauchrohrs (15) durch ein Fluid aufgrund eines nur in dem Tauchrohr (15) möglichen Druckausgleichs bei einem weiteren Einfüllen von Fluid in den Fluidtank (2) ein Fluidpegel in dem Tauchrohr (15) schneller ansteigt als abseits des Tauchrohrs (15) und das Fluid (6) den Strömungswiderstand (17) erreicht, bevor ein Schwimmer (21) mit einem Ventilsitz (22) zum Unterbrechen der Strömungsverbindung durch das Füllstandsventil (13) zusammenwirkt, sodass sich der Druckverlust über das Füllstandsventil (13) bei Erreichen des Strömungswiderstands durch das Fluid zum Unterbinden oder Einschränken des Entlüftens des Fluidtanks (2) durch das Füllstandsventil (13) erhöht.

2. Füllstandsventil nach Anspruch 1, **dadurch gekennzeichnet, dass** der Strömungswiderstand (17) einen kleinsten Durchströmungsquerschnitt aufweist, der kleiner ist als der kleinste Durchströmungsquerschnitt des Anschlussstutzens (14) und/oder der kleinste Durchströmungsquerschnitt des Tauchrohrs (15).

3. Füllstandsventil nach einem der vorhergehenden Ansprüche, **dadurch gekennzeichnet, dass** der Strömungswiderstand (17) von einem Ringsteg (19) gebildet ist, der eine bezüglich einer Längsmittelachse (20) des Tauchrohrs (15) parallel angeordnete Längsmittelachse aufweist.

4. Füllstandsventil nach einem der vorhergehenden Ansprüche, **dadurch gekennzeichnet, dass** der Schwimmer (21) an dem Tauchrohr (15) verlagerbar gelagert ist, wobei der Schwimmer (21) in einer ersten Stellung zum Freigeben einer Strömungsverbindung durch den Ventilsitz (22) beabstandet von dem Ventilsitz (22) vorliegt und in einer zweiten Stellung zum Unterbrechen der Strömungsverbindung durch den Ventilsitz (22) mit dem Ventilsitz (22) zusammenwirkt, insbesondere an dem Ventilsitz (22) anliegt.

5. Füllstandsventil nach einem der vorhergehenden Ansprüche, **dadurch gekennzeichnet, dass** der Ventilsitz (22) im Längsschnitt gesehen von einem, insbesondere von dem Ringsteg (19) nach Anspruch 3 ausgehenden, Axialsteg (23) gebildet ist, der in axialer Richtung in das Tauchrohr (15) hineinragt und von einem Innenumfang des Tauchrohrs (15) beabstandet angeordnet ist.

6. Füllstandsventil nach einem der vorhergehenden Ansprüche, **dadurch gekennzeichnet, dass** der Schwimmer (21) in der ersten Stellung in einem an dem Tauchrohr (15) befestigten oder von dem Tauchrohr (15) gebildeten Führungskäfig (24) angeordnet ist, über den der Anschlussstutzen (14) nach Anordnung des Tauchrohrs (15) in dem Fluidtank (2) mit einem Fluidtankinnenraum (26) des Fluidtanks (2) in Strömungsverbindung steht.

7. Füllstandsventil nach einem der vorhergehenden Ansprüche, **dadurch gekennzeichnet, dass** der Schwimmer (21) auf seiner dem Ventilsitz (22) abgewandten Seite einen Hohlraum (27) aufweist, der in die dem Ventilsitz (22) abgewandte Richtung offen ist.

8. Füllstandsventil nach einem der vorhergehenden Ansprüche, **dadurch gekennzeichnet, dass** sich der Schwimmer (21) in der ersten Stellung an einer Bodenplatte (31) abstützt, die auf der dem Anschlussstutzen (14) abgewandten Seite an dem Tauchrohr (15) angeordnet ist.

9. Füllstandsventil nach Anspruch 8, **dadurch gekennzeichnet, dass** eine die Bodenplatte (31) durchgreifende Ausnehmung (37) den Strömungswiderstand (17) bildet.

10. Fluidtankanordnung (1) mit einem Fluidtank (2), einer an einer Mündungsstelle in den Fluidtank (2) einmündenden Einfüllleitung (3) und einer Druckausgleichsleitung (12), die beabstandet von der Mündungsstelle einerseits an den Fluidtank (2) strömungstechnisch angeschlossen ist und andererseits in die Einfüllleitung (3) einmündet, wobei die Druckausgleichsleitung (12) über ein Füllstandsventil (13) nach einem der vorhergehenden Ansprüche an den Fluidtank (2) angeschlossen ist, das einen an dem Fluidtank (2) angeordneten Anschlussstutzen (14) aufweist.

## Claims

1. A fill level valve (13) for a pressure equalization line (12) of a fluid tank assembly (1), wherein the pressure equalization line (12) is fluidically connected between a fluid tank (2) and a filling line (3) opening into the fluid tank (2), wherein the fill level valve (13) comprises a connecting piece (14) which can be arranged on the fluid tank (2), from which a dip tube (15), which can be arranged in the fluid tank (2), and which is fluidically connected to the connecting piece (14), originates from the connecting piece, wherein a flow resistance (17) formed by a constricted through-flow cross section is provided in the dip tube (15), **characterized in that** the fill level valve (13) is designed in such a way that upon fluid reaching the dip tube (15), due to a pressure equalization only possible in the dip tube (15), upon further filling of fluid into the fluid tank (2), a fluid level rises faster in the dip tube (15) than outside the dip tube (15) and the fluid (6) reaches the flow resistance (17), before a floater (21) interacts with a valve seat (22) to interrupt the fluidic connection through the fill level valve (13), so that the pressure loss via the fill level valve (13) increases, upon the fluid reaching the flow resistance, to suppress or restrict the venting of the fluid tank (2) through the fill level valve (13).

2. The fill level valve as claimed in claim 1, **characterized in that** the flow resistance (17) has a smallest through-flow cross section which is smaller than the smallest through-flow cross section of the connecting piece (14) and/or the smallest through-flow cross section of the dip tube (15).

3. The fill level valve as claimed in any one of the preceding claims, **characterized in that** the flow resistance (17) is formed by a ring web (19), which has a longitudinal center axis arranged in parallel with respect to a longitudinal center axis (20) of the dip tube (15).

4. The fill level valve as claimed in any one of the preceding claims, **characterized in that** a floater (21) is displaceably mounted on the dip tube (15), which is provided spaced apart from the valve seat (22) in a first position to release a fluidic connection through the valve seat (22) and interacts with the valve seat (22), in particular abuts against the valve seat (22), in a second position to interrupt the fluidic connection through the valve seat (22).

5. The fill level valve as claimed in any one of the preceding claims, **characterized in that** the valve seat (22), viewed in longitudinal section, is formed by an axial web (23), which originates in particular from the ring web (19) according to claim 3, and which protrudes in the axial direction into the dip tube (15) and is arranged spaced apart from an inner circumference of the dip tube (15).

6. The fill level valve as claimed in any one of the preceding claims, **characterized in that** the floater (21) is arranged in the first position in a guide cage (24) fastened on the dip tube (15) or formed by the dip tube (15), via which the connecting piece (14) has a fluidic connection to a fluid tank interior (26) of the fluid tank (2) after the dip tube (15) is arranged in the fluid tank (2).

7. The fill level valve as claimed in any one of the preceding claims, **characterized in that** the floater (21) comprises a cavity (27), which is open in the direction facing away from the valve seat (22), on its side facing away from the valve seat (22).

8. The fill level valve as claimed in any one of the preceding claims, **characterized in that** the floater (21) supports itself in the first position on a bottom plate (31), which is arranged on the dip tube (15) on the side facing away from the connecting piece (14).

9. The fill level valve according to claim 8, **characterized in that** a recess (37) extending through the bottom plate (31) forms the flow resistance (17).

10. A fluid tank assembly (1) comprising a fluid tank (2), a filling line (3) opening into the fluid tank (2) at an orifice point, and a pressure equalization line (12), which, spaced apart from the orifice point, is fluidically connected to the fluid tank (2), on the one hand, and opens into the filling line (3), on the other hand, wherein the pressure equalization line (12) is connected via a fill level valve (13) as claimed in any one of the preceding claims, to the fluid tank (2), which comprises a connecting piece (14) arranged on the fluid tank (2).

## Revendications

1. Soupape de niveau de remplissage (13) pour une conduite d'équilibrage de pression (12) d'un agencement de réservoir de fluide (1), la conduite d'équilibrage de pression (12) étant raccordée fluidiquement entre un réservoir de fluide (2) et une conduite de remplissage (3) débouchant dans le réservoir de fluide (2), la soupape de niveau de remplissage (13) présentant une tubulure de raccordement (14) pouvant être disposée sur le réservoir de fluide (2), de laquelle part un tube plongeur (15) pouvant être disposé dans le réservoir de fluide (2), qui est raccordé fluidiquement à la tubulure de raccordement (14), une résistance à l'écoulement (17) formée par une section transversale d'écoulement rétrécie étant présente dans le tube plongeur (15), **caractérisé en ce que** la soupape de niveau de remplissage (13) est conçue de telle sorte, qu'à partir du moment où le tube plongeur (15) est atteint par un fluide, en raison d'une équilibrage de pression possible uniquement dans le tube plongeur (15) lors d'un autre remplissage de fluide dans le réservoir de fluide (2), un niveau de fluide augmente plus rapidement dans le tube plongeur (15) qu'à l'écart du tube plongeur (15) et le fluide (6) atteint la résistance à l'écoulement (17) avant qu'un flotteur (21) ne coopère avec un siège de soupape (22) pour interrompre la communication d'écoulement à travers la soupape de niveau de remplissage (13), de sorte que la perte de pression à travers la soupape de niveau de remplissage (13) augmente lorsque la résistance à l'écoulement est atteinte par le fluide pour empêcher ou limiter la purge du réservoir de fluide (2) à travers la soupape de niveau de remplissage (13).

2. Soupape de niveau de remplissage selon la revendication 1, **caractérisée en ce que** la résistance à l'écoulement (17) présente une plus petite section transversale d'écoulement qui est inférieure à la plus petite section transversale d'écoulement de la tubulure de raccordement (14) et/ou à la plus petite section transversale d'écoulement du tube plongeur (15).

3. Soupape de niveau de remplissage selon l'une des revendications précédentes, **caractérisée en ce que** la résistance à l'écoulement (17) est formée par une nervure annulaire (19) qui présente un axe médian longitudinal disposé parallèlement par rapport à un axe médian longitudinal (20) du tube plongeur (15).

4. Soupape de niveau de remplissage selon l'une des revendications précédentes, **caractérisée en ce que** le flotteur (21) est monté de manière à pouvoir être déplacé sur le tube plongeur (15), le flotteur (21) étant, dans une première position, écarté du siège de soupape (22) pour libérer une communication d'écoulement par le siège de soupape (22) et, dans une deuxième position, coopérant avec le siège de soupape (22), notamment en appui sur le siège de soupape (22), pour interrompre la communication d'écoulement à travers le siège de soupape (22).

5. Soupape de niveau de remplissage selon l'une des revendications précédentes, **caractérisée en ce que** le siège de soupape (22) est formé, vu en coupe longitudinale, par une nervure axiale (23), notamment partant de la nervure annulaire (19) selon la revendication 3, qui pénètre dans le tube plongeur (15) dans la direction axiale et est disposée à distance d'une périphérie intérieure du tube plongeur (15).

6. Soupape de niveau de remplissage selon l'une des revendications précédentes, **caractérisée en ce que**, dans la première position, le flotteur (21) est disposé dans une cage de guidage (24) fixée au tube plongeur (15) ou formée par le tube plongeur (15), par l'intermédiaire de laquelle la tubulure de raccordement (14) est en communication d'écoulement avec un espace intérieur de réservoir de fluide (26) du réservoir de fluide (2) après l'agencement du tube plongeur (15) dans le réservoir de fluide (2).

7. Soupape de niveau de remplissage selon l'une des revendications précédentes, **caractérisée en ce que** le flotteur (21) présente, sur son côté opposé au siège de soupape (22), un espace creux (27) qui est ouvert dans la direction opposée au siège de soupape (22).

8. Soupape de niveau de remplissage selon l'une des revendications précédentes, **caractérisée en ce que**, dans la première position, le flotteur (21) s'appuie sur une plaque de fond (31) disposée sur le tube plongeur (15) du côté opposé à la tubulure de raccordement (14).

9. Soupape de niveau de remplissage selon la revendication 8, **caractérisée en ce qu'**un évidement (37) traversant la plaque de fond (31) forme la résistance à l'écoulement (17).

10. Agencement de réservoir de fluide (1) avec un réservoir de fluide (2), une conduite de remplissage (3) débouchant dans le réservoir de fluide (2) à un point d'embouchure et une conduite d'équilibrage de pression (12) qui, à distance du point d'embouchure, est d'une part raccordée fluidiquement au réservoir de fluide (2) et d'autre part débouche dans la conduite de remplissage (3), la conduite d'équilibrage de pression (12) étant raccordée au réservoir de fluide (2) par l'intermédiaire d'une soupape de niveau de remplissage (13) selon l'une des revendications précédentes, qui présente une tubulure de raccordement (14) disposée sur le réservoir de fluide (2).
